Europäisches Patentamt

(19) European Patent Office

Office européen des brevets

(11) Veröffentlichungsnummer: **0 039 700**
**B1**

(12) **EUROPÄISCHE PATENTSCHRIFT**

(45) Veröffentlichungstag der Patentschrift:
**25.05.83**

(51) Int. Cl.³: **E 04 B 7/10,** B 29 C 25/00

(21) Anmeldenummer: **80902114.0**

(22) Anmeldetag: **04.11.80**

(86) Internationale Anmeldenummer:
**PCT/EP 80/00125**

(87) Internationale Veröffentlichungsnummer:
**WO 81/01304 (14.05.81** Gazette 81/12)

(54) **STARRER, EINSTÜCKIGER, BIAXIAL GERECKTER KUNSTSTOFFFORMKÖRPER UND VERFAHREN ZU SEINER HERSTELLUNG.**

(30) Priorität: **05.11.79 DE 7931201 U**

(43) Veröffentlichungstag der Anmeldung:
**18.11.81 Patentblatt 81/46**

(45) Bekanntmachung des Hinweises auf die Patenterteilung:
**25.05.83 Patentblatt 83/21**

(84) Benannte Vertragsstaaten:
**DE FR GB NL**

(56) Entgegenhaltungen:
**DE-B-1 559 427**
**FR-A-2 184 486**
**NL-A-7 214 430**
**US-A-3 000 057**
**US-A-3 727 356**

(73) Patentinhaber: **Röhm GmbH, Kirschenallee
Postfach 4242, D-6100 Darmstadt 1 (DE)**

(72) Erfinder: **OLEIKO, Bernd J., Heesbergstrasse 22,
D-4100 Duisburg-74-Baerl (DE)**
Erfinder: **MÜLLER, Dieter, Adolf-Kolping-Strasse 1,
D-6102 Pfungstadt (DE)**
Erfinder: **KERK, Klaus, Bessunger Strasse 10a,
D-6103 Griesheim (DE)**

Starrer, einstückiger, biaxial gereckter Kunststofformkörper und Verfahren zu seiner Herstellung

Die Erfindung betrifft starre Formkörper, die sich als leichte Bauelemente eignen und vorzugsweise lichtdurchlässig sind. Formteile dieser Gattung sind z. B. Lichtkuppeln oder Tonnengewölbe aus Acrylglasplatten. Sie werden vorwiegend als lichtdurchlässiges Dachelement eingesetzt. Die genannten Formkörper stellen nicht für alle in der Praxis vorkommenden Belastungen die günstigste technische Lösung dar. So werden bei einer ungleichförmigen Belastung einer Lichtkuppel von der Oberseite alle auftretenden Kräfte in Druck- bzw. Beulspannungen umgesetzt. Dadurch kann örtlich die Beulsteifigkeit überschritten und die Kuppel eingedrückt werden. Dieser Vorgang kann den Bruch der Kuppel einleiten. Einfache Tonnengewölbe sind in dieser Hinsicht noch empfindlicher.

Lichtkuppeln sind äußerst starre Gebilde, was in vielen Fällen erwünscht, aber manchmal auch von Nachteil ist. Zum Abdecken von Seilnetzwerken, Gitterschalenkonstruktionen und ähnlichen, nicht völlig starren Unterkonstruktionen sind zwar zur Herstellung größerer geschlossener Abdeckungen formbeständige, im wesentlichen starre Formkörper erwünscht, jedoch sollen sie noch eine begrenzte Beweglichkeit haben, damit sie bei elastischen Deformationen der Unterkonstruktion nicht gleich zu Bruch gehen. Tonnengewölbe gemäß DE-A-2 107 728 sind wesentlich flexibler, aber wegen der oben schon erwähnten geringen Beulsteifigkeit oft nicht verwendbar.

Ein Nachteil, den Lichtkuppeln und Tonnengewölbe gemeinsam besitzen, besteht darin, daß bei einer Reihung dieser Bauelemente zu längeren Bändern oder größeren Flächen die Kunststoffflächen stets die am höchsten aufragenden Teile der Bedachung bilden. Daher können auf derartige Bedachungen bei Reparaturen und Wartungsarbeiten keine Gerüstteile oder Seile oder dergleichen aufgelegt werden, ohne das Kunststoffmaterial zu gefährden.

Aus der DE-B-2 430 182 ist ein starrer, einstückiger Formkörper aus Kunststoff als Dacheindekkungselement bekannt, dessen Rand nicht in einer Ebene liegt. Infolge eines einstückig angeformten Rahmens ist der bekannte Formkörper vollständig verwindungssteif und nicht zu elastischen Deformationen fähig. Seine Fläche ist bedeutend größer als die von dem Rand eingeschlossene gedachte ebene Ausgangsfläche. Der Formkörper hat die gleichen, oben geschilderten Nachteile wie andere bekannte Dacheindeckungselemente, z. B. Lichtkuppeln.

Aus der DE-A-1 779 858 ist es bereits bekannt, eine biaxial vorgereckte Kunststoffscheibe, deren Rand in einem beweglichen Rahmen fixiert ist, nach dem Erwärmen bis zum thermoplastischen Zustand durch Verschieben der Rahmenteile umzuformen. Die Rahmenteile verbleiben dabei stets in einer Ebene. Die Kunststoffplatte verbleibt entweder in dieser Ebene oder wird unter Flächenvergrößerung aufgewölbt. Dabei entstehen nicht-starre, schiefwinklige flache Platten oder schiefwinklige Kuppeln, die die schon erwähnten Nachteile haben.

Aus der DE-B-1 559 427 und der US-A-3 727 356 sind mehr oder weniger starre Bauelemente aus verschiedenen Werkstoffen bekannt, die eine kleinere Fläche als die von ihrem Rand eingeschlossene gedachte ebene Ausgangsfläche haben können. Diese Bauelemente werden in aufwendiger Arbeitsweise aus einer Vielzahl von Einzelteilen zusammengesetzt. So bestehen die Membrantragwerke nach DE-B-1 559 427 aus einem durch Zuganker ausgesteiften Rahmen und einer Membran, beispielsweise aus Kunststoff, die mit den Rahmenteilen und Zugankern verbunden ist. US-A-3 727 356 sieht vor, hyperbolisch-paraboloidal gekrümmte Bauelemente durch Verleimen mehrerer Lagen Sperrholz in einer entsprechend geformten Presse oder durch thermische Verformung eines aus Nut- und Feder-Profilen zusammengesetzten, in sich verschiebbaren Paneels zu erzeugen. Keines dieser Verfahren gestattet die Herstellung starrer einstückiger Kunststofformkörper.

Die Vermeidung dieser Nachteile bei Formkörpern der im Oberbegriff des Anspruchs 1 genannten Gattung ist die Aufgabe der vorliegenden Erfindung. Es wurde gefunden, daß diese Aufgabe durch solche Formkörper der gattungsgemäßen Art gelöst wird, die gemäß dem kennzeichnenden Teil des Anspruchs 1 ausgebildet sind.

Die gedachte ebene Ausgangsfläche ist eine Fläche, die aus einer Ebene durch Krümmen oder Knicken um eine oder mehrere Bruchlinien entsteht. Der Rand der erfindungsgemäßen Formkörper liegt stets in einer solchen ebenen Ausgangsfläche. Diese Fläche wird geometrisch als ebene Fläche bezeichnet, weil ihre Erzeugende eine Gerade ist. Beispiele derartiger ebener Ausgangsflächen sind Zylinder- und Kegelflächen oder Satteldachflächen. Der Rand des Formkörpers liegt zwar in einer derartigen ebenen Ausgangsfläche, aber nicht in einer Ebene im engeren Sinne, worunter eine Fläche zu verstehen ist, innerhalb der durch jeden Punkt beliebig viele Geraden gelegt werden können.

Die von dem Rand des Formkörpers eingeschlossene ebene Ausgangsfläche ist nicht gleichzeitig die Fläche des erfindungsgemäßen Formkörpers. Dessen Fläche weicht von der ebenen Ausgangsfläche ab und ist kleiner als diese. Von Sonderfällen abgesehen, gehört die Fläche der erfindungsgemäßen Formkörper geometrisch nicht zur Gattung der ebenen Flächen, da ihre Erzeugenden keine Geraden sind. Es handelt sich um antiklastische, d. h. sattelförmig gekrümmte Flächen mit negativer Gauß'scher Krümmung, die in der Ebene nicht abwickelbar sind. Im Idealfall handelt es sich um eine Minimalfläche, also die mathematisch kleinstmögliche, von dem vorgegebenen Rand eingeschlossene Fläche. Aus Gründen, die hier nicht erörtert zu werden brauchen, sind die bevorzugten Formkörper gemäß der Erfindung zwar der mathematischen Minimalfläche angenähert, aber damit nicht exakt übereinstimmend.

Durch besondere Maßnahmen lassen sich von der exakten Minimalfläche stärker abweichende Flächenformen ausbilden, was aus konstruktiven sowie aus gestalterischen Gründen erwünscht sein kann. Derartige Flächenformen ergeben sich z. B. bei Verstärkung in den Randzonen oder im Sattelbereich.

Wie bei der Beschreibung des Herstellungsverfahrens für die neuen Formkörper weiter unten erläutert wird, geht die der Minimalfläche angenäherte Gestalt der erfindungsgemäßen Formkörper aus der ebenen Ausgangsfläche dadurch hervor, daß man eine biaxial gereckte Platte aus Kunststoff im thermoelastischen Zustand bei fixiertem Rand teilweise rückschrumpfen läßt. Aufgrund der in der biaxial gereckten Ausgangsplatte eingefrorenen Rückschrumpfungskräfte versucht die Platte beim Erwärmen bis zum thermoelastischen Zustand auf ihre ursprüngliche kleinere Fläche zurückzuschrumpfen. Dieser Schrumpfungsprozeß wird durch den fixierten Rand begrenzt. Infolgedessen wird die kleinstmögliche Fläche innerhalb des vorgegebenen Randes angestrebt, wobei unter günstigen Umständen nahezu eine Minimalfläche erreicht wird. Voraussetzung für die Ausbildung einer der Minimalfläche nahekommenden Gestalt ist eine nur teilweise Rückschrumpfung aus dem ursprünglichen biaxial gereckten Zustand. Der entstehende Formkörper muß also immer noch an jeder Stelle biaxial gereckt sein, wenn auch in geringerem Maße als die ursprünglich eingesetzte biaxial gereckte Platte. Vorzugsweise beträgt der restliche Reckungsgrad mindestens noch 25%. Je gleichmäßiger die Restreckung an jeder Stelle und in jeder Richtung des Formkörpers verteilt ist, um so näher liegt seine Gestalt an der mathematischen Minimalfläche.

Vor einer Kuppel- oder Tonnengewölbefläche hat die angenäherte Minimalfläche den Vorzug der höheren Beulsteifigkeit. Die Fläche ist an fast jedem Punkt in zwei zueinander senkrecht liegenden Richtungen gegensinnig (antiklastisch) gekrümmt. Dadurch entsteht bei punktförmiger Belastung in einer dieser Richtungen eine Druckspannung und in der anderen Richtung eine Zugspannung. Infolgedessen wird eine Beulung so lange verhindert, wie die Zugfestigkeit des Materials nicht überschritten wird.

Die erfindungsgemäßen Formkörper sind zwar im wesentlichen starr und verwindungssteif und behalten ihre Gestalt auch im nicht-eingebauten Zustand bei. Sie sind jedoch weniger starr als Kuppeln und vermögen daher begrenzten Bewegungen des Randes elastisch nachzugeben. Sie sind einstückig in dem Sinne, daß sie nicht aus mehreren, getrennt hergestellten Teilen lösbar zusammengesetzt sind, sondern aus durchgehendem nahtlosem Material bestehen, was allerdings auflaminierte Verstärkungselemente, gegebenenfalls aus anderen Werkstoffen, nicht ausschließt. Bei der Reihung der Formkörper zu Lichtbändern oder ausgedehnten Dachflächen bilden die Ränder jeweils die am weitesten herausragenden Bauteile. Die Ränder sind im allgemeinen durch stabile Metallrahmen gefaßt und gestatten es, Wartungsgerüste u. dergl. darauf abzustützen. Es lassen sich auf einfache Weise Formkörper mit Grundflächen erzeugen, die sich lückenlos zu großen Flächen addieren lassen. Daraus ergibt sich die Möglichkeit, den Formkörper mit einer geeigneten Randeinfassung als modulares, baukonstruktives Systemelement auszubilden und additiv zur Herstellung von weitspannenden Flächentragwerken zu verwenden.

Als Werkstoff für die erfindungsgemäßen Formkörper eignen sich diejenigen reckbaren Kunststoffe, die sich zur Herstellung von Bauelementen bewährt haben. An erster Stelle ist Acrylglas wegen seiner unübertroffenen Alterungs- und Witterungsbeständigkeit zu nennen. Geeignet sind ferner Polyvinylchlorid und Polycarbonat, insbesondere wenn sie zum Schutz der Oberfläche eine dünne Schicht aus Acrylkunststoff tragen. Um die erforderliche Verwindungssteifigkeit zu gewährleisten, soll die Dicke wenigstens 1 mm betragen. Die bevorzugte Dicke liegt zwischen 2 und 6 mm. Die Fläche eines Formkörpers kann z. B. zwischen 1 und 10 m² liegen. Glasklares, durchsichtiges Material oder durchscheinend weiß getrübtes Material sind bevorzugt, jedoch kann auch deckend oder transparent eingefärbtes Material verwendet werden. Das zur Herstellung der Formkörper verwendete Ausgangsmaterial ist wenigstens 25%, vorzugsweise 40 bis 80% biaxial gereckt und kann aus in situ polymerisiertem oder aus stranggepreßtem Plattenmaterial durch biaxiale Reckung im thermoelastischen Zustand hergestellt worden sein.

Zu den Vorteilen der neuen Formkörper gehört auch die Möglichkeit, sie auf verhältnismäßig einfache Weise ohne Berührung in der Fläche herzustellen. Man geht dabei stets in der Weise vor, daß der Plattenrand in eine nicht in einer Ebene liegende Stellung gebracht und fixiert wird und daß man die von dem Rand eingeschlossene Fläche im thermoelastischen Zustand teilweise zurückschrumpfen läßt. Die erfindungsgemäße Gestalt entsteht dann von selbst unter der Wirkung der freigesetzten Rückstellkräfte ohne Einwirkung eines Gasüberoder -unterdruckes auf einer Seite der Platte. Da eine völlig berührungslose Formung der Plattenfläche (abgesehen von der Einspannung am Rand) möglich ist, sind Beschädigungen der Plattenoberfläche praktisch ausgeschlossen. Im einzelnen richtet sich das zweckmäßigste Herstellungsverfahren nach der angestrebten Gestalt des Formkörpers und wird nachfolgend anhand bevorzugter Ausführungsformen erläutert.

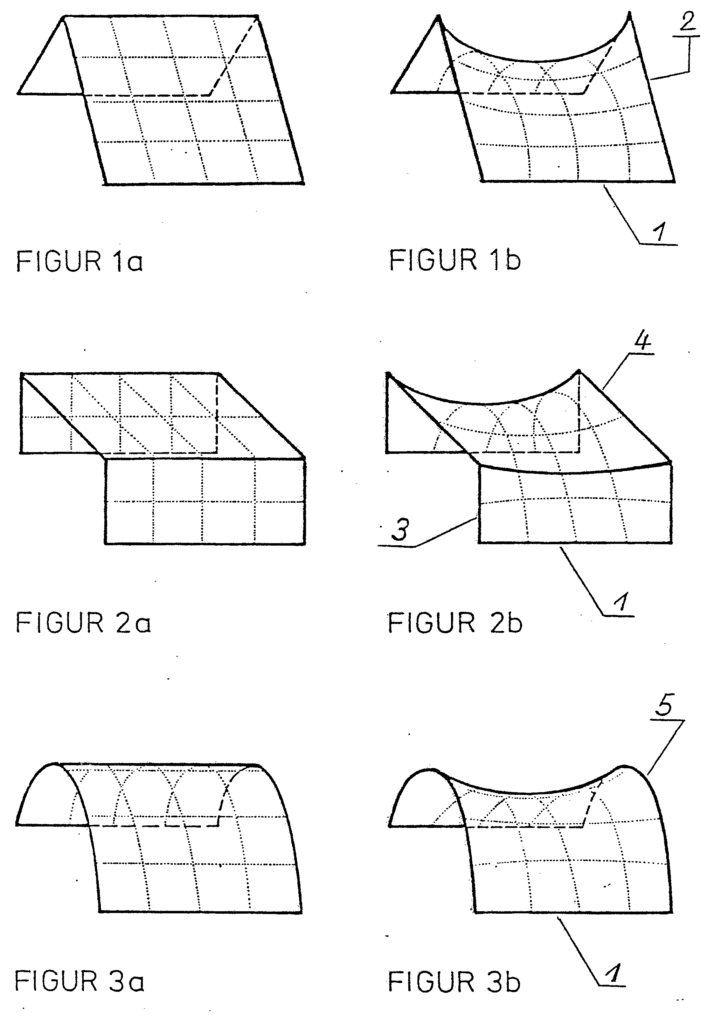

Die bevorzugten Ausführungsformen sind in den Figuren 1 bis 4 dargestellt, wobei jeweils mit a die gedachte ebene Ausgangsfläche und mit b die der Minimalfläche angenäherte Gestalt des fertigen Formkörpers bezeichnet ist. Zur Verdeutlichung des Flächenverlaufs ist jeweils sowohl in die ebene Ausgangsfläche als auch in die Fläche des Formkörpers ein punktiertes Liniennetz eingezeichnet, das technisch ohne eigene Bedeutung ist.

In Figur 1 bildet die Ausgangsfläche ein Satteldach,

in Figur 2 einen rechtwinkligen Kasten,

in Figur 3 einen Zylinderabschnitt, und

in Figur 4 ein diagonal geknicktes Quadrat.

In den Figuren 5 und 6 sind die Grundflächen von weiteren Formkörpern nach der Erfindung dargestellt. Die dick ausgezogenen Linien stellen die Umrisse der Grundflächen, die strichpunktierten Linien die Umrisse der eingesetzten ebenen Kunststoffplatten und die punktierten Linien die Knicklinien zur Erzeugung der ebenen Ausgangsflächen dar. Figur 5b und 6b zeigen Möglichkeiten zur flächendeckenden Reihung.

Zur Herstellung der Formkörper gemäß den Figuren 1, 2 und 4, in denen die Ausgangsfläche scharfkantige Knicklinien enthält, verwendet man vorzugsweise einen den Rand einfassenden Spannrahmen mit Klappgelenken an den Endpunkten der Knicklinien. Die ebene biaxial gereckte Kunststoffplatte wird kalt in den Spannrahmen in der Weise eingespannt, daß sich der Plattenrand beim Erwärmen bis zum thermoelastischen Zustand unter der Einwirkung der freigesetzten Rückschrumpfkräfte nicht aus der Einspannung herauszieht. Der Rahmen wird dann, beispielsweise in einem Warmluftschrank, bis zur Erweichung der Kunststoffplatte erwärmt. Im Falle von Acrylglas erstreckt sich der thermoelastische Zustandsbereich von etwa 130 bis 160°C. Nunmehr wird der Spannrahmen um die Gelenke so weit geknickt, bis der Rand die gewünschte Form eingenommen hat. Dabei schrumpft die eingeschlossene Fläche in der oben beschriebenen Weise zu einer der Minimalfläche angenäherten Form zusammen. In dieser Gestalt läßt man den Formkörper erkalten und kann ihn nach Lösen des Spannrahmens als formstabiles Gebilde entnehmen.

Zur Herstellung von Formkörpern mit gekrümmten Rändern gemäß Figur 3 wird ein entsprechend gekrümmter Spannrahmen verwendet, in welchen die zunächst ebene Kunststoffplatte unter elastischer Krümmung eingelegt wird. Die Platte nimmt dann die in Figur 3a dargestellte Stellung ein und wird in dieser Lage eingespannt. Sobald beim Erwärmen der thermoelastische Zustand erreicht ist, beginnt die Schrumpfung und führt zu der in Figur 3b dargestellten Gestalt.

In analoger Weise können auch die in den Figuren 1, 2 und 4 dargestellten Formkörper erzeugt werden, wenn man einen entsprechend geknickten Spannrahmen ohne Gelenke verwendet. Die ebene Ausgangsplatte wird vor dem Einspannen in einer schmalen Zone an der Knicklinie bis zur Erweichung erwärmt und in die gewünschte Form gebogen. Die angrenzenden, nicht erwärmten Flächen verhindern die Kontraktion des erwärmten Streifens. Die Platte wird anschließend eingespannt, bis zum thermoelastischen Zustand erwärmt und schließlich abgekühlt.

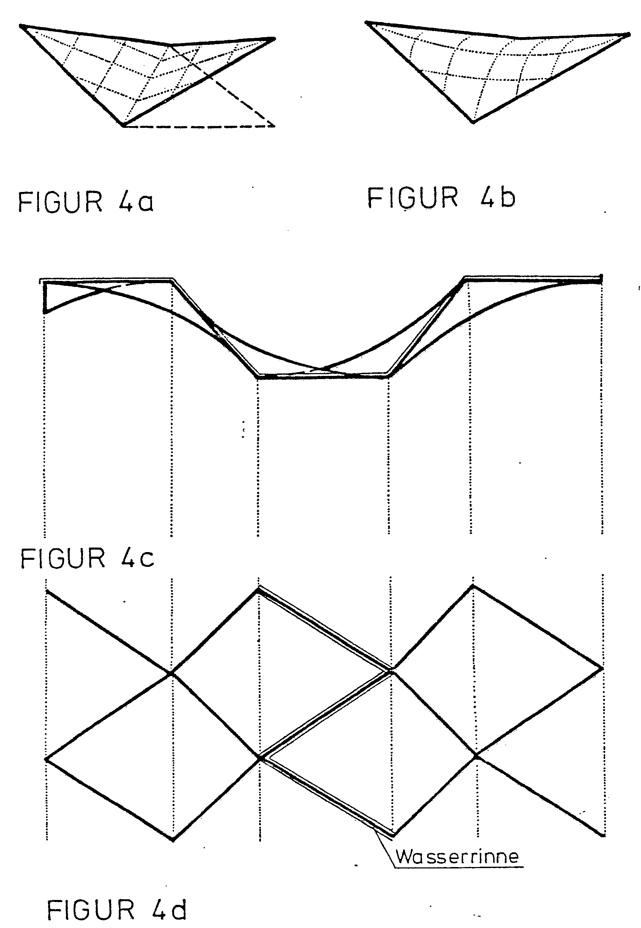

Die in den Figuren 1 bis 3 dargestellten Formkörper überdecken rechteckige Grundflächen und eignen sich daher in besonderem Maße zu einer linearen oder flächigen Reihung. Auch der in Figur 4 dargestellte Formkörper läßt sich, wie in den Figuren 4c und 4d dargestellt, zu einer trapezförmig gewellten Dachfläche zusammenfügen.

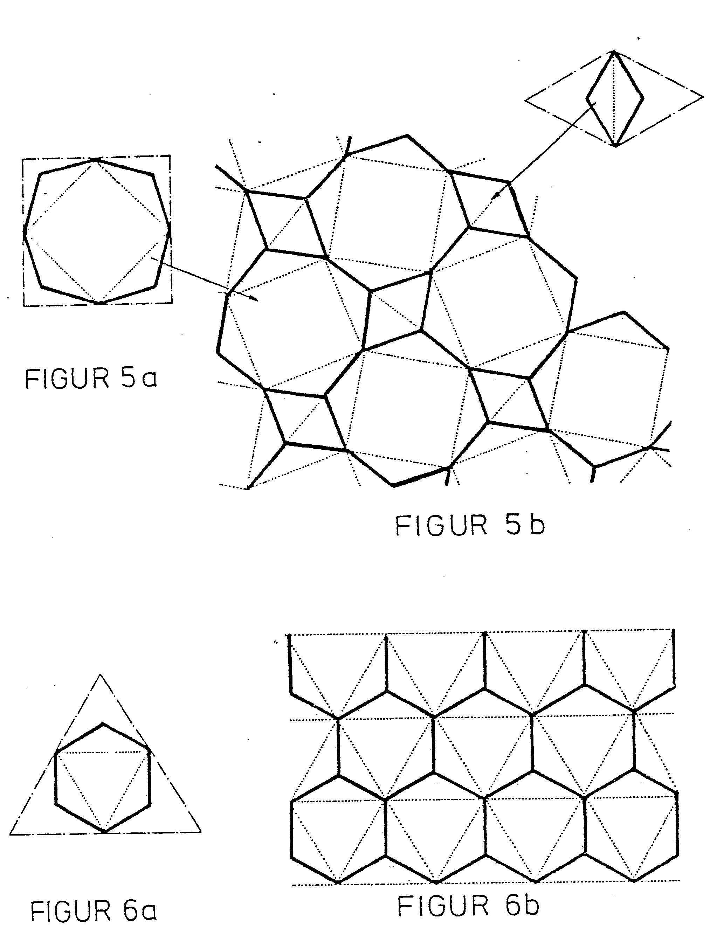

Im Interesse einer besonderen architektonischen und ästhetischen Wirkung können Formkörper mit der Grundfläche eines regelmäßigen Sechsecks oder Achtecks hergestellt werden, wenn die Ausgangsplatte die Form eines gleichseitigen Dreiecks bzw. eines Quadrates hat und Knicklinien jeweils über die Mittelpunkte benachbarter Seiten geführt werden. Die entstehenden Sechseck-Körper lassen sich allein zu einer Fläche schließen, während bei einer Reihung von Achteck-Körpern zusätzliche Formkörper mit quadratischer Grundfläche benötigt werden, wie in den Figuren 5 und 6 dargestellt. Die Möglichkeit, eine Vielzahl von einzelnen Minimalflächenelementen konstruktiv zu einer Gesamtfläche zu addieren, die ihrerseits eine Minimalfläche bildet, soll nicht unerwähnt bleiben.

**Patentansprüche**

1. Starrer einstückiger Formkörper aus biaxial gerecktem, plattenförmigem Kunststoff von mindestens 1 mm Dicke, dadurch gekennzeichnet,

a) daß der Rand des Formkörpers in einer (gedachten) Fläche verläuft, deren Erzeugende eine Gerade ist und die aus einer Ebene durch Krümmen oder Knicken um eine oder mehrere Bruchlinien hervorgegangen ist,

b) daß die Oberfläche des Formkörpers kleiner ist als der Flächenausschnitt, den der Rand des Formkörpers innerhalb der oben genannten (gedachten) Fläche abgrenzt,

c) und daß der Formkörper aus einer gekrümmten oder um eine oder mehrere Bruchlinien geknickten, biaxial gereckten Kunststoffplatte, deren Oberfläche vor der Umformung in der unter a) definierten Fläche gelegen hat, durch teilweise Rückschrumpfung im thermoelastischen Zustand bei Fixierung des Randes in einer Stellung, die innerhalb der unter a) definierten Fläche verläuft, unter Aufrechterhaltung eines biaxialen Reckungszustandes an jeder Stelle des Formkörpers hergestellt worden ist.

2. Formkörper nach Anspruch 1, dadurch gekennzeichnet, daß seine Fläche der von dem Rand eingeschlossenen mathematischen Minimalfläche angenähert ist.

3. Formkörper nach Anspruch 1, dadurch gekennzeichnet, daß der Rand aus geradlinigen Teilstücken besteht.

4. Formkörper nach Anspruch 1, dadurch gekennzeichnet, daß er paarweise gegenüberliegend zwei geradlinige und zwei bogenförmige Randstücke hat und eine rechteckige oder trapezförmige Grundfläche überdeckt.

5. Verfahren zur Herstellung eines Formkörpers nach Anspruch 1 durch Umformen einer ebenen Platte aus biaxial gerecktem Kunststoff von mindestens 1 mm Dicke im thermoelastischen Zustandsbereich und anschließende Abkühlung unter die Erweichungstemperatur, wobei durch Fixierung des Plattenrandes eine Rückschrumpfung des Randes im thermoelastischen Zustand verhindert wird, dadurch gekennzeichnet, daß der Plattenrand in eine nicht in einer Ebene liegende Stellung gebracht und die von dem Rand eingeschlossene Fläche im thermoelastischen Zustand unter Aufrechterhaltung eines biaxialen Reckungszustandes an jeder Stelle des Formkörpers teilweise zurückschrumpfen gelassen wird.

6. Verfahren nach Anspruch 5, dadurch gekennzeichnet, daß die teilweise Rückschrumpfung der Plattenfläche berührungsfrei und bei gleichem Gasdruck auf beiden Plattenseiten erfolgt.

7. Verfahren nach Anspruch 5, dadurch gekennzeichnet, daß der fixierte Plattenrand im thermoelastischen Zustand durch Knicken an wenigstens zwei Stellen in eine nicht in einer Ebene liegende Stellung gebracht wird.

8. Verfahren nach Anspruch 5, dadurch gekennzeichnet, daß die gereckte Platte bei einer Temperatur unterhalb der Erweichungstemperatur durch elastisches Biegen so verformt wird, daß der Plattenrand eine nicht in einer Ebene liegende Stellung einnimmt, daß der Plattenrand in dieser Stellung fixiert und die Platte anschließend bis zum thermoelastischen Zustand erwärmt wird.

9. Verfahren nach Anspruch 5, dadurch gekennzeichnet, daß eine geradlinig begrenzte, biaxial gereckte Platte eingesetzt wird.

10. Verfahren nach Anspruch 5, dadurch gekennzeichnet, daß eine rechteckige Platte eingesetzt wird.

## Claims

1. Rigid integral shaped body consisting of biaxially stretched plastics material in sheet form at least 1 mm thick, characterised in that

a) the edge of the shaped body extends along an (imaginary) surface, the generatrix of which is a straight line and which is produced from a plane by bending or folding about one or more fracture lines,

b) the surface area of the shaped body is smaller than the portion of area which is defined by the edge of the shaped body within the above mentioned (imaginary) surface,

c) and the shaped body has been produced from a biaxially stretched plastics sheet which has been bent or folded along one or more fracture lines, the surface of this sheet having lain in the surface defined in paragraph a), and the shaped body is produced by partial shrinkage in the thermoelastic state whilst the edge is fixed in a position which extends within the area defined in a), and with biaxial stretching being maintained at every point of the shaped body.

2. Shaped body as claimed in claim 1, characterised in that its surface area is approximately equal to the mathematical minimum surface area enclosed by the edge.

3. Shaped body as claimed in claim 1, characterised in that the edge consists of rectilinear portions.

4. Shaped body as claimed in claim 1, characterised in that it has two rectilinear and two arcuate edge portions arranged in pairs opposite each other and covers a rectangular or trapezoidal base area.

5. Process for producing a shaped body as claimed in claim 1 by shaping a planar sheet of biaxially stretched plastics at least 1 mm thick in the thermoelastic range and subsequently cooling it to below the softening temperature, any shrinkage of the edge in the thermoelastic state being prevented by the fixing of the edge of the sheet, characterised in that the edge of the sheet is brought into a position which is not in a plane and the area enclosed by the edge is allowed to shrink partially, in the thermoelastic state, whilst biaxial stretching is maintained at every point of the shaped body.

6. Process as claimed in claim 5, characterised in that the partial shrinkage of the surface of the sheet is effected without allowing any contact therewith and with equal gas pressure on both sides of the sheet.

7. Process as claimed in claim 5, characterised in that the fixed edge of the sheet is brought into a position which is not in a plane, in the thermoelastic state, by bending at at least two points.

8. Process as claimed in claim 5, characterised in that the stretched sheet is formed by elastic bending at a temperature below the softening temperature in such a way that the edge of the sheet assumes a position which is not in a plane, in that the edge of the sheet is fixed in this position and the sheet is subsequently heated until it reaches the thermoelastic state.

9. Process as claimed in claim 5, characterised in that a biaxially stretched sheet bounded by straight lines is used.

10. Process as claimed in claim 5, characterised in that a rectangular sheet is used.


**Revendications**

1. Pièce rigide moulée d'une seule pièce en une matière synthétique en plaque, étirée biaxialement, d'au moins 1 mm d'épaisseur, caractérisée

a)  en ce que le bord de la pièce moulée s'étend dans une surface (imaginaire) dont la génératrice est une droite et qui résulte de la courbure d'un plan ou de sa brisure autour d'une ou de plusieurs lignes de pliure,

b)  en ce que la surface de la pièce moulée est plus petite que la fraction de surface que le bord de la pièce moulée délimite à l'intérieur de la surface (imaginaire) précitée,

c)  et en ce que la pièce moulée a été fabriquée, à partir d'une plaque de matière synthétique étirée biaxialement, courbée ou brisée autour d'une ou de plusieurs lignes de pliure, plaque dont la surface a été placée, avant le formage, dans la surface définie en a), par retrait partiel à l'état thermoélastique, tandis que son bord est fixé dans une position qui s'étend à l'intérieur de la surface définie en a), avec maintien d'un état d'étirage biaxial en tout point de la pièce moulée.


2. Pièce moulée selon la revendication 1, caractérisée en ce que sa surface s'approche de la surface minimale mathématique contenue dans le bord.

3. Pièce moulée selon la revendication 1, caractérisée en ce que le bord se compose de segments rectilignes.

4. Pièce moulée selon la revendication 1, caractérisée en ce qu'elle comporte, opposées deux à deux, deux parties de bord rectilignes et deux parties de bord arquées, et en ce qu'elle recouvre une surface de base rectangulaire ou trapézoidale.

5. Procédé pour la fabrication d'une pièce moulée selon la revendication 1 par formage, dans la gamme de température de l'état thermoélastique, d'une plaque plane de matière synthétique étirée biaxialement de 1 mm d'épaisseur au moins, suivi d'un refroidissement au-dessous de la température de ramollissement, un retrait du bord à l'état thermoélastique étant empêché par fixation du bord de la plaque, caractérisé en ce que le bord de la plaque est mis dans une position non située dans un plan et on laisse la surface contenue dans le bord se rétracter en partie à l'état thermoélastique, en maintenant un état d'étirage biaxial en tout point de la pièce moulée.

6. Procédé selon la revendication 5, caractérisé en ce que le retrait partiel de la surface de la plaque s'effectue sans contact et à la même pression de gaz sur les deux faces de la plaque.

7. Procédé selon la revendication 5, caractérisé en ce que le bord fixé de la plaque est mis dans une position non située dans un plan, à l'état thermoélastique, par pliure en deux points au moins.

8. Procédé selon la revendication 5, caractérisé en ce que la plaque étirée est déformée par flexion élastique, à une température inférieure à la température de ramollissement, de telle manière que le bord de la plaque prenne une position non située dans un plan, en ce que le bord de la plaque est fixé dans cette position, et en ce que la plaque est ensuite chauffée jusqu'à l'état thermoélastique.

9. Procédé selon la revendication 5, caractérisé en ce qu'on met en oeuvre une plaque étirée biaxialement, limitée par des segments de droite.

10. Procédé selon la revendication 5, caractérisé en ce qu'on met en oeuvre une plaque rectangulaire.

0 039 700

FIGUR 1a

FIGUR 1b

FIGUR 2a

FIGUR 2b

FIGUR 3a

FIGUR 3b

7

FIGUR 4a

FIGUR 4b

FIGUR 4c

FIGUR 4d

Wasserrinne

FIGUR 5a

FIGUR 5b

FIGUR 6a

FIGUR 6b